(19) Europäisches Patentamt / European Patent Office / Office européen des brevets

(11) **EP 3 051 987 B1**

(12) **FASCICULE DE BREVET EUROPEEN**

(45) Date de publication et mention
de la délivrance du brevet:
**21.11.2018 Bulletin 2018/47**

(21) Numéro de dépôt: **14780453.8**

(22) Date de dépôt: **30.09.2014**

(51) Int Cl.:
***A47J 31/44*** *(2006.01)*

(86) Numéro de dépôt international:
**PCT/EP2014/070944**

(87) Numéro de publication internationale:
**WO 2015/049238 (09.04.2015 Gazette 2015/14)**

(54) **MACHINE D'INFUSION**

INFUSIONSMASCHINE

INFUSION MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.10.2013 BE 201300659**

(43) Date de publication de la demande:
**10.08.2016 Bulletin 2016/32**

(73) Titulaire: **TCONCEPT COMPANY S.P.R.L.**
**1325 Corroy-le-Grand (BE)**

(72) Inventeur: **VAN BELLEGHEM, Luc**
**B-1332 Rixensart (BE)**

(74) Mandataire: **Office Kirkpatrick**
**Avenue Wolfers, 32**
**1310 La Hulpe (BE)**

(56) Documents cités:
**WO-A1-2013/011078    WO-A1-2013/046149**
**FR-A1- 2 912 124    US-A1- 2002 048 621**
**US-A1- 2011 308 397**

**Description**

Le domaine de l'invention est celui des machines à infuser des produits pour infusion du genre thé, menthe, camomille et autres produits analogues.

Pour préparer des infusions, on a l'habitude de prendre des feuilles séchées d'un produit pour infusion, éventuellement de les broyer et de les mettre dans des sachets qu'on introduit, par exemple dans une théière, avant d'y verser de l'eau chaude pour provoquer un choc thermique et ainsi craquer les molécule produit et provoquer la libération de la couleur et des arômes.

Contrairement aux machines à café, dans lesquelles de l'eau chaude doit traverser le café, dans les machines à infusion, une capsule d'un produit pour infusion est mise en communication étanche avec une chambre d'infusion. On injecte de l'eau chaude dans la capsule qui passe dans la chambre. Le produit à infuser infuse et migre dans la chambre d'infusion, formant donc avec la capsule l'espace d'infusion, avant que la boisson infusée ne soit vidée dans un récipient pour consommation.

La qualité de l'infusion dépend essentiellement de deux données d'infusion qui sont, d'une part, la température de l'eau et, d'autre part, la durée des étapes d'infusion. La température de l'eau doit provoquer un choc thermique nécessaire et la durée d'infusion ne doit pas être trop longue faute de provoquer une trop grande amertume.

C'est pourquoi, les constructeurs de machines d'infusion ont proposé de rapporter sur les capsules d'infusion les données à respecter pour l'obtention d'une bonne infusion et de prévoir dans les machines d'infusion les dispositifs de reconnaissance de ces données pour contrôler en conséquence les différents organes des machines.

Les données d'infusion peuvent être rapportées sous de multiples formes. Il peut s'agir d'un code barres, d'un code couleurs, voir même d'une puce électronique.

Les capsules étant généralement introduites dans une goulotte avant d'atteindre par gravité leur position de mise en communication avec la chambre d'infusion, les machines d'infusion actuellement sur le marché comporte donc une goulotte dans la partie haute de laquelle, à proximité de l'embouchure d'introduction, il est prévu une tirette rétractable sur laquelle les capsules viennent buter pour qu'un organe de reconnaissance puisse saisir les données d'infusion avant que les capsules, après étractation, ou effacement, de la tirette, ne soient libérées et puissent poursuivre leur chute jusqu'à leur position de mise en communication avec la chambre d'infusion. Il faut noter que, avec certaines machines, les capsules y sont directement placées en position de mise en communication avec la chambre.

C'est ici que le problème à l'origine de l'invention de la présente demande peut être présenté.

Après éjection d'une capsule hors de la machine à infusion, ou après avoir écarté la capsule de la chambre et l'avoir recueillie dans un compartiment approprié de la machine, il est procédé, avec de l'eau chaude, au rinçage de la chambre d'infusion, ouverte sur l'extérieure puisqu'il n'y a plus de capsule pour l'obstruer. L'eau chaude de rinçage produit de la vapeur qui monte dans la machine venant lécher l'organe de reconnaissance des données d'infusion qui se trouve en partie haute. L'organe s'en trouve pollué avec un grand risque de reconnaissance erronée des données. On notera que même si on rince la chambre à l'eau froide, l'infusion produit de toutes façons de la vapeur néfaste à la reconnaissance des données.

C'est ce problème de pollution que la demanderesse a cherché à résoudre et c'est ainsi qu'elle propose son invention.

A cet effet, l'invention de la présente demande concerne une machine d'infusion selon la revendication 1.

En tout état de cause, les moyens de reconnaissance de la machine de l'invention ne se trouvent plus dans le haut de la machine, près de l'embouchure d'introduction de la goulotte, s'il s'agit d'une machine qui en est pourvue.

De ce fait, les moyens de reconnaissance échappent également à l'action perturbatrice de la lumière qui vient frapper le haut de la machine.

On notera que le document WO2013/011078 divulgue une machine destinée à produire des boissons chaudes telles que du thé. Toutefois, ce document n'aborde pas le problème de la pollution du dispositif de reconnaissance des données d'infusion par de la vapeur issue du rinçage de la machine.

Quant au document US2002/048621, s'il aborde la reconnaissance des données portées par les capsules, il ignore aussi le problème de pollution résolu par l'invention de la présente demande.

De préférence, et la machine étant pourvue d'une goulotte de réception d'une capsule, la goulotte de réception de capsule comportant un bord inférieur juste au-dessus desdits moyens de mise en communication, les moyens de reconnaissance sont disposés en-dessous de ce bord inférieur et, encore avantageusement, à l'extérieur de l'enveloppe de la goulotte, du côté opposé à la chambre d'infusion.

Quand une capsule se trouve en position de mise en communication avec la chambre d'infusion, en face de son ouverture de communication, la membrane de filtrage de la capsule tournée vers la chambre pour que l'eau puisse ensuite passer de l'une à l'autre de la chambre et de la capsule, ces données d'infusion sont saisies par le poussoir, soit avant qu'il ne commence son action de poussée de la capsule, soit pendant son mouvement d'entrainement de la capsule, soit encore après le mouvement d'entrainement, la capsule se trouvant alors dans une position stable.

Les moyens de reconnaissance des données d'infusion, selon la forme dans laquelle les données d'infusion sont rapportées sur les capsules, comprennent des éléments et organes bien connus de l'homme du métier qu'il ne sera donc pas nécessaire de décrire plus loin. Qu'il soit toutefois indiqué que ces moyens peuvent comprendre des photodétecteurs, un lecteur de puce, etc...L'invention sera mieux comprise à l'aide de la description suivante de la forme de réalisation préférée de la machine de l'invention, en référence au dessin en annexe, sur lequel :

- la figure 1 est une vue en coupe très schématique de la machine, sans capsule ;

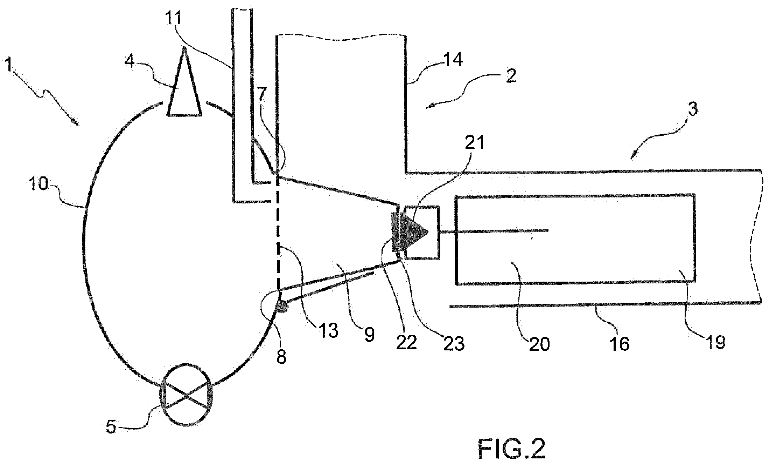

- la figure 2 est une vue en coupe de la machine de la figure 1, avec une capsule en communication étanche avec la chambre d'infusion et

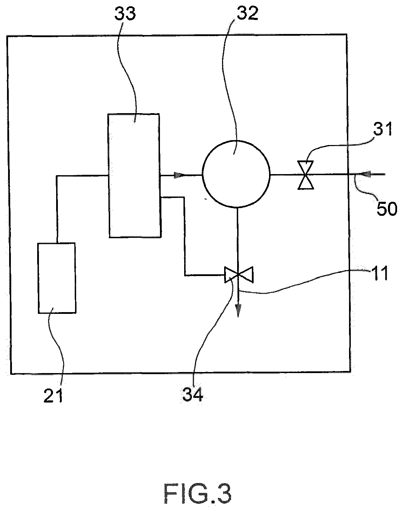

- la figure 3 est un schéma-blocs des moyens de contrôle des étapes d'infusion de la machine.

Dans un carter non représenté, pas plus que ses divers composants sans lien avec l'invention, la machine représentée sur les figures comporte une chambre d'infusion 1, ici une goulotte 2 de réception et d'amenée d'une capsule d'infusion et un vérin 3. Dans d'autres machines, on pourrait venir placer la capsule directement en position de mise en communication avec la chambre, soit manuellement, soit à l'aide d'un tiroir pivotant, par exemple.

La chambre d'infusion 1, avec une paroi 10, ici de forme ovoïde, bien que d'autres formes puissent être parfaitement envisagées, comporte, en partie haute, une buse d'arrivée d'eau de rinçage 4 et, en partie basse, une vanne d'écoulement de liquide infusé 5. Dans la partie ici médiane, sensiblement à mi-hauteur, la chambre 1 comporte une ouverture 6 de communication avec une capsule d'infusion 9, ouverture dont le bord 7 est conformé en une lèvre annulaire d'étanchéité assurant la coopération étanche avec la lèvre complémentaire 8 d'une capsule d'infusion 9 quand elle est poussée contre la chambre. Un tube 11 d'arrivée d'eau d'infusion plonge, depuis le haut de la machine, dans la chambre avec un bec d'extrémité 12 recourbé vers l'ouverture 6 pour projeter l'eau d'infusion à travers la membrane de filtrage 13 d'une capsule 9, après leur mise en communication étanche.

La goulotte 2 de réception et d'amenée d'une capsule d'infusion 9 comporte une paroi-enveloppe 14 ici de forme tubulaire, avec un bord inférieur 15 raccordé à la chambre d'infusion 1, par la partie supérieure de son ouverture, et au carter 16 du vérin 2, par la partie supérieure de son bord antérieur 17 tourné vers la chambre 1.

Le vérin 3 comporte donc un carter 16, avec un bord antérieur 17 ménageant une ouverture 18 de passage d'un piston-poussoir 19, monté pour continuer à l'intérieur du carter et dont l'extrémité antérieure 20 porte un dispositif 21 de reconnaissance des données d'infusion 22 portées ici par le culot 23 des capsules d'infusion 9, consommables de la machine de l'invention.

Le vérin 3 est un vérin de mise en communication étanche de la chambre et d'une capsule 9 par entrainement et poussée de la capsule 9, par son culot 22, par l'intermédiaire de l'extrémité antérieure 20 du piston 19, jusqu'à l'étroite coopération des lèvres 7,8 de l'ouverture 6 de la chambre 1 et de la capsule 9, respectivement

Un volet 30, servant de siège à une capsule 9 pendant l'infusion et sur lequel la capsule a été poussée par le piston 20 pour assurer la communication étanche entre la chambre 1 et la capsule 9, est articulé sur la partie inférieure 24 du bord de l'ouverture 6 de la chambre pour pouvoir pivoter et s'abaisser afin de permettre l'éjection de la capsule 9 vers le bas par gravité après l'infusion. Le volet est remonté en position haute d'appui d'une capsule par un petit poussoir.

Le dispositif de reconnaissance 21 porté par le piston 19 est disposé en-dessous du bord inférieur 15 de la goulotte 2 qui se trouve juste au-dessus du vérin de mise en communication.

Ce dispositif de reconnaissance 21, en tout état de cause se trouve ici à l'extérieur du prolongement de l'enveloppe 14 de la goulotte 2. Les données d'infusion saisies par le dispositif de reconnaissance vont permettre de contrôler les étapes d'infusion se déroulant dans la machine.

A cet effet, la machine comporte, sur l'arrivée d'eau 50, une vanne 31, un dispositif de chauffe 32, relié à l'arrivée d'eau par la vanne 31, un contrôleur 33, relié au dispositif de reconnaissance et qui va contrôler la température de chauffe du dispositif de chauffe 32 et les durées des différentes étapes d'infusion par la commande d'une vanne 34 montée sur le tube d'arrivée d'eau 11 plongeant dans la chambre d'infusion 1.

A titre purement indicatif, un cycle d'infusion particulier va maintenant être décrit.

1. Dans une première étape de 8 à 10 secondes, on injecte $\frac{2}{3}$ du volume total ici de 180 ml d'eau chaude à bonne température T dans la chambre par le tube 11.

2. On laisse infuser à travers la membrane de filtrage 13 d'une capsule 9 pendant $\frac{2}{3}$ de la durée totale t du cycle d'infusion.

3. Puis on réinjecte $\frac{1}{3}$ du volume total d'eau chaude pour homogénéiser l'infusion.

4. On laisse alors au repos pendant encore $\frac{1}{3}$ de la durée du cycle t.

5. On ouvre la vanne d'écoulement 5 pour verser l'infusion dans un récipient.

6. On ferme la vanne 5.

7. On écarte la capsule 9 de la chambre.

8. On rince la chambre 1 par la buse 4, ici avec de l'eau chaude.

Avant de dérouler le cycle d'infusion, une capsule 9 doit d'abord être mise en communication avec la chambre 1 et former un espace d'infusion. A cet effet, on l'introduit dans la goulotte 2, puis elle tombe sur le volet 30 en position haute de siège. Le culot 23 de la capsule, sur lequel se trouvent les données d'infusion est alors en face du dispositif de reconnaissance 21 qui les saisit et les transmet au contrôleur 33 qui commande divers composants de la machine, notamment le vérin 2, la soupape 5, la buse 4 et le volet 30. Le piston 19 pousse la capsule 9 contre la chambre. La capsule 9 glisse le long du volet 30 jusqu'à ce que les lèvres 7,8 de la chambre et de la capsule coopèrent de façon étanche. Le cycle d'infusion peu alors commencer.

Pour écarter la capsule 9 de la chambre, on laisse le volet d'appui 30 pivoter vers le bas, la capsule se désolidarise de la chambre et s'écarte par gravité. Le volet d'appui 30 constitue ce qui a été désignés plus haut par les moyens pour écarter, ou d'écartement.

Commence alors le rinçage de la chambre d'infusion ici à l'eau chaude.

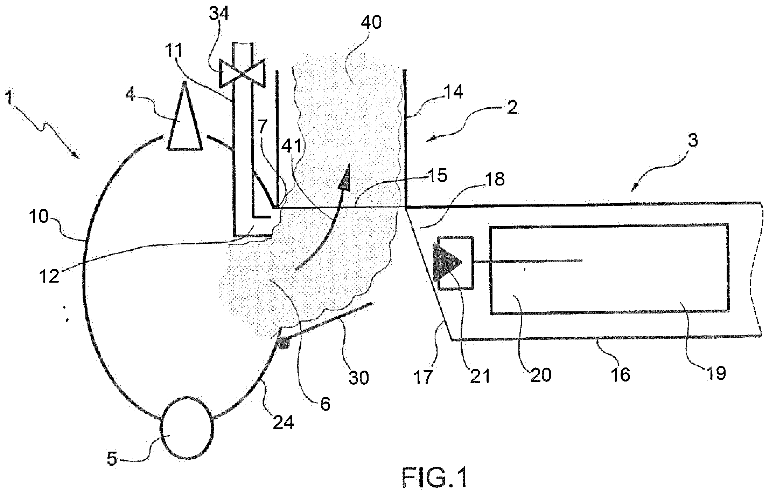

La vapeur 40 qui se dégage par l'ouverture 6 de la chambre, vapeur d'eau de rinçage et/ou vapeur d'infusion, monte selon un trajet courbe représenté sur la figure 1 par la flèche 41 qui concentre le flux de vapeur montante à l'intérieur de l'enveloppe 14 de la goulotte 2 et qui, surtout, ne heurte pas le vérin 3 et le dispositif de reconnaissance 21 qui se trouve hors du trajet de la vapeur, en partie base de la machine.

On a décrit une machine d'infusion avec une arrivée d'eau d'infusion dans la chambre. On notera que dans certaines autres machines, l'eau d'infusion arrive directement dans la capsule d'infusion.

## Revendications

1. Machine d'infusion comprenant :

   - une chambre d'infusion (1) avec
   - des moyens d'introduction d'eau d'infusion (34) et de rinçage (4),
   - des moyens (5) d'écoulement d'un liquide infusé,
   - des moyens (2) de réception d'une capsule (9) d'un produit à infuser portant des données d'infusion (22) portées par son culot (23) opposé à sa membrane de filtrage (13),
   - des moyens (3, 19) de mise en communication étanche de la chambre d'infusion (1) avec une capsule d'infusion (9) par une ouverture de communication (6),
   - des moyens (30) pour écarter la capsule de la chambre (1),
   - des moyens (21) de reconnaissance des données d'infusion (22) portées par une capsule d'infusion (9),

   machine **caractérisée par le fait que** les moyens (3, 19) de mise en communication étanche de la chambre d'infusion (1) et d'une capsule (9) comportent un piston-poussoir (19) d'un vérin (3) agencé pour se déplacer vers l'ouverture de communication (6) de la chambre d'infusion (1) et portant les moyens (21) de reconnaissance des données d'infusion (22), les moyens (21) de reconnaissance des données d'infusion (22) sont portés par l'extrémité antérieure (20) du piston-poussoir (19) tournée vers la chambre d'infusion (1) et lesdits moyens de reconnaissance (21) sont déposés hors du trajet (41) de la vapeur d'eau sortant de la chambre d'infusion (1) par l'ouverture de communication (6) de la chambre d'infusion après écartement de la capsule (9) de la chambre (1).

2. Machine selon la revendication 1, dans laquelle les moyens de réception de capsule comportent une goulotte (2) comportant un bord inférieur (15) juste au-dessus desdits moyens de mise en communication (3) et les moyens de reconnaissance (21) sont disposés en-dessous de ce bord inférieur (15).

3. Machine selon la revendication 2, dans laquelle les moyens de reconnaissance (21) sont disposés à l'extérieur de l'enveloppe (14) de la goulotte (2), du côté opposé à la chambre d'infusion (1).

4. Machine selon l'une des revendications 1 à 3, dans laquelle lesdits moyens d'écartement comportent un volet d'appui pivotant (30).

5. Machine selon l'une de revendications 1 à 4, dans lesquelles les moyens (21) de reconnaissance des données d'infusion sont reliés à un contrôleur (33) qui commande divers composants (2, 4, 5, 30) de la machine.

## Patentansprüche

1. Brühmaschine, umfassend:

   - eine Brühkammer (1) mit
   - Mitteln zum Einführen von Brüh- (34) und Spül- (4) Wasser,
   - Mitteln (5) zum Ablassen einer aufgebrühten Flüssigkeit,
   - Mitteln (2) zum Aufnehmen einer Kapsel (9) eines aufzubrühenden Produkts, die Brühdaten (22) trägt, die auf ihrer Angussstelle (23) gegenüber ihrer Filtermembran (13) getragen werden,
   - Mitteln (3, 19) zum Herstellen einer dichten Verbindung der Brühkammer (1) mit einer Brühkapsel (9) über eine Verbindungsöffnung (6),
   - Mitteln (30) zum Entfernen der Kapsel von der Kammer (1),
   - Mitteln (21) zum Erkennen der Brühdaten (22), die von der Brühkapsel (9) getragen werden,

wobei die Maschine **dadurch gekennzeichnet ist, dass** die Mittel (3, 19) zum Herstellen einer dichten Verbindung der Brühkammer (1) mit einer Brühkapsel (9) einen Schubkolben (19) eines Zylinders (3) umfassen, der eingerichtet ist, um sich in Richtung auf die Verbindungsöffnung (6) der Brühkammer (1) zu verlagern, und die Mittel (21) zum Erkennen der Brühdaten (22) trägt, die Mittel (21) zum Erkennen der Brühdaten (22) von dem vorderen Ende (20) des Schubkolbens (19) getragen werden, das der Brühkammer (1) zugewandt ist, und die Erkennungsmittel (21) außerhalb des Wegs (41) des Wasserdampfs angeordnet sind, der aus der Brühkammer (1) durch die Verbindungsöffnung (6) der Brühkammer nach dem Entfernen der Kapsel (9) von der Kammer (1) austritt.

2. Maschine nach Anspruch 1, wobei die Mittel zum Aufnehmen einer Kapsel eine Rinne (2) umfassen, die einen unteren Rand (15) direkt über den Mitteln zum Herstellen einer Verbindung (3) umfasst, und die Mittel zum Erkennen (21) unter diesem unteren Rand (15) angeordnet sind.

3. Maschine nach Anspruch 2, wobei die Erkennungsmittel (21) außerhalb der Hülle (14) der Rinne (2) auf der Seite gegenüber der Brühkammer (1) angeordnet sind.

4. Maschine nach einem der Ansprüche 1 bis 3, wobei die Mittel zum Entfernen eine schwenkbare Stützklappe (30) umfassen.

5. Maschine nach einem der Ansprüche 1 bis 4, wobei die Mittel (21) zum Erkennen der Brühdaten mit einer Steuerung (33) verbunden sind, die diverse Komponenten (2, 4, 5, 30) der Maschine steuert.

**Claims**

1. Infusion machine comprising:

   - an infusion chamber (1) having
   - means for introducing water for infusion (34) and rinsing (4),
   - means (5) for conveying an infused liquid,
   - means (2) for receiving a capsule (9) of a product to be infused, bearing infusion data (22) which are provided on their base (23) opposite their filter membrane (13),
   - means (3, 19) for establishing a sealed communication between the infusion chamber (1) and an infusion capsule (9) by means of a communication opening (6),
   - means (30) for discarding the capsule from the chamber (1),
   - means (21) for recognising the infusion data (22) borne by an infusion capsule (9),

the machine being **characterised in that** the means (3, 19) for establishing a sealed communication between the infusion chamber (1) and a capsule (9) comprise a push piston (19) of a jack (3) arranged to move towards the communication opening (6) of the infusion chamber (1) and bearing the means (21) for recognising the infusion data (22), the means (21) for recognising the infusion data (22) are carried by the front end (20) of the push piston (19) facing the infusion chamber (1) and the said recognition means (21) are disposed outside the path (41) of the steam leaving the infusion chamber (1) through the communication opening (6) in the infusion chamber after the capsule (9) has been discarded from the chamber (1).

2. Machine according to claim 1, wherein the capsule receiving means comprise a chute (2) having a lower edge (15) just above said communication means (3), and the recognition means (21) are arranged below this lower edge (15).

3. Machine according to claim 2, wherein the recognition means (21) are arranged outside the casing (14) of the chute (2), on the opposite side to the infusion chamber (1).

4. Machine according to one of claims 1 to 3, wherein the said discarding means comprise a pivoting support flap (30).

5. Machine according to one of claims 1 to 4, wherein the means (21) for recognising the infusion data are connected to a controller (33) which controls various components (2, 4, 5, 30) of the machine.

FIG.1

FIG.2

EP 3 051 987 B1

FIG.3

**EP 3 051 987 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2013011078 A
- US 2002048621 A